(19) Europäisches Patentamt
European Patent Office
Office européen des brevets

(11) **EP 2 870 740 B1**

(12) **FASCICULE DE BREVET EUROPEEN**

(45) Date de publication et mention
de la délivrance du brevet:
**14.09.2016 Bulletin 2016/37**

(21) Numéro de dépôt: **13744709.0**

(22) Date de dépôt: **05.07.2013**

(51) Int Cl.:
*H04L 27/00* (2006.01)     *H04J 1/12* (2006.01)

(86) Numéro de dépôt international:
**PCT/FR2013/051618**

(87) Numéro de publication internationale:
**WO 2014/006351 (09.01.2014 Gazette 2014/02)**

(54) **PROCÈDE DE RECHERCHE D'UN SIGNAL UTILE DANS UNE BANDE DE MULTIPLEXAGE**

VERFAHREN ZUR SUCHE EINES NUTZSIGNALES IN EINEM MULTIPLEXING-BAND

METHOD OF SEARCHING A USEFUL SIGNAL IN A MULTIPLEXING BAND

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.07.2012 FR 1256483**

(43) Date de publication de la demande:
**13.05.2015 Bulletin 2015/20**

(73) Titulaire: **SIGFOX**
**31670 Labège (FR)**

(72) Inventeur: **ARTIGUE, Cédric**
**F-31400 Toulouse (FR)**

(74) Mandataire: **Ipside**
**6, Impasse Michel Labrousse**
**31100 Toulouse (FR)**

(56) Documents cités:
**WO-A1-2011/154466     US-A1- 2006 133 388
US-A1- 2011 021 167**

• **BIING HWANG JUANG ET AL: "Signal Processing
in Cognitive Radio", PROCEEDINGS OF THE
IEEE, IEEE. NEW YORK, US, vol. 97, no. 5, 1 mai
2009 (2009-05-01), pages 805-823, XP011256330,
ISSN: 0018-9219**

**Description**

## DOMAINE TECHNIQUE

La présente invention appartient au domaine des télécommunications numériques, et concerne plus particulièrement la recherche de la présence d'un signal utile de largeur spectrale ΔB prédéfinie dans une bande fréquentielle partagée de largeur spectrale supérieure à ΔB.

## ÉTAT DE LA TECHNIQUE

Dans les systèmes de télécommunications numériques, il est connu de d'utiliser une même bande fréquentielle, dite « bande de multiplexage », pour les émissions de signaux utiles par des terminaux à destination d'une station. En général, les signaux utiles ont la même largeur spectrale, et ladite largeur spectrale est connue a priori de la station. Il est également possible, dans certains cas, d'avoir plusieurs largeurs spectrales possibles, mais toutes connues a priori de la station.

En outre, les fréquences centrales autour desquelles des signaux utiles peuvent être émis sont, dans le cas le plus général, également prédéfinies et connues a priori de la station. De la sorte, la recherche de la présence d'un signal utile émis dans la bande de multiplexage peut se limiter à une détection de puissance sur chacune des fréquences centrales possibles.

Il existe cependant des cas dans lesquels les fréquences centrales d'émission de signaux utiles ne sont pas connues à l'avance.

Par exemple, la demande internationale PCT, publiée sous le numéro WO 2011/154466, décrit un système de télécommunications numériques à bande étroite dans lequel la largeur spectrale ΔB des signaux utiles est de l'ordre de quelques hertz à quelques centaines de hertz.

En outre, pour assurer un multiplexage statistique en fréquences des signaux utiles dans la bande de multiplexage (FSFDMA, « Forced Statistical Frequency Division Multiple Access »), la dérive en fréquence desdits signaux utiles est supérieure à la largeur spectrale ΔB.

On comprend donc que dans un tel cas, il n'est pas possible de connaître à l'avance les fréquences centrales autour desquelles des signaux utiles sont susceptibles d'être reçus par la station du système de télécommunications numériques. Ainsi, la recherche de la présence d'un signal utile dans la bande de multiplexage doit être réalisée dans toute la bande de multiplexage, et doit par conséquent s'accompagner d'une recherche de la fréquence centrale (au moins initiale si celle-ci varie au cours du temps) autour de laquelle un signal utile est reçu par la demande américaine US2011/0021167 divulgue les caractéristiques de la préambule de la revendication 1.

Une telle recherche conjointe de présence et de fréquence centrale peut s'avérer complexe à réaliser, en particulier si la bande de multiplexage est significativement plus large que la largeur spectrale ΔB des signaux utiles.

## EXPOSÉ DE L'INVENTION

La présente invention a pour objectif de remédier à tout ou partie des limitations des solutions de l'art antérieur, notamment celles exposées ci-avant, en proposant une solution qui permette de rechercher la présence d'un signal utile, de fréquence centrale non connue a priori dans une bande de multiplexage, de façon simple et robuste.

En outre, l'invention a également pour objectif de proposer une solution qui permette, au moins dans certains modes de réalisation, de ne détecter que les signaux utiles susceptibles d'être décodés sans erreurs.

A cet effet, et selon un premier aspect, l'invention concerne un procédé de recherche de la présence d'un signal utile dans un signal global, ledit signal utile correspondant à un signal radioélectrique de largeur spectrale ΔB prédéfinie émis par un terminal dans une bande de multiplexage de largeur spectrale supérieure à ΔB, le signal global correspondant à l'ensemble des signaux radioélectriques reçus dans la bande de multiplexage. Le procédé de recherche comporte des étapes de :

- calcul d'un signal fréquentiel représentatif d'une densité spectrale de puissance du signal global échantillonnée à des fréquences élémentaires de la bande de multiplexage,
- calcul d'un signal, dit « signal non utile », par filtrage du signal fréquentiel au moyen d'un filtre adapté à supprimer principalement tout ou partie de signaux de largeur spectrale égale ou inférieure à ΔB dans ledit signal fréquentiel,
- calcul d'un signal, dit « signal de rapport de puissance », représentatif du rapport, en chaque fréquence élémentaire, entre le signal fréquentiel et le signal non utile,
- comparaison du signal de rapport de puissance à une valeur seuil prédéfinie, une fréquence élémentaire pour laquelle ledit signal de rapport de puissance présente un maximum local supérieur à ladite valeur seuil étant considérée comme étant la fréquence centrale d'un signal utile présent dans le signal global.

Un tel procédé de recherche est relativement simple à mettre en oeuvre, dans la mesure où il requiert peu d'opérations après obtention du signal fréquentiel. En particulier, le filtre utilisé pour calculer le signal non utile peut être un simple filtre à réponse impulsionnelle finie.

Il est à noter en outre que le filtre utilisé pour calculer le signal non utile est un filtre fréquentiel, c'est-à-dire qu'il réalise, dans le domaine fréquentiel, une combinaison linéaire d'échantillons différents du signal fréquentiel correspondant à des fréquences élémentaires différentes.

Par conséquent, l'application de ce filtres fréquentiel n'introduit pas de retard autre que celui correspondant au temps de calcul nécessaire de la convolution, et introduit uniquement un décalage fréquentiel qui peut être facilement compensé. Ainsi, le procédé de recherche, par l'utilisation d'un filtre fréquentiel, permet une détection rapide de signaux utiles dans le signal global, là où l'utilisation d'un filtre temporel, appliqué à des échantillons obtenus pour des instants différents consécutifs, introduirait nécessairement un retard dépendant de l'ordre dudit filtre temporel.

Un tel procédé de recherche est en outre robuste dans la mesure où il utilise, pour déterminer si un signal utile est présent dans le signal global, un signal de rapport de puissance qui est représentatif du rapport signal sur bruit/interférence qu'aurait un signal utile en chaque fréquence élémentaire.

En effet, le signal non utile est représentatif, en chaque fréquence élémentaire, de la puissance reçue sur cette fréquence élémentaire, les signaux de largeur spectrale égale ou inférieure à $\Delta B$ (et par conséquent tous les signaux utiles éventuellement présents dans le signal global) ayant été préalablement supprimés.

Le signal fréquentiel est quant à lui représentatif, en chaque fréquence élémentaire, de la totalité de puissance reçue sur cette fréquence élémentaire, qui correspond à la puissance du signal non utile sur cette fréquence élémentaire, le cas échéant cumulée à la puissance d'un signal utile présent sur cette fréquence élémentaire.

Dans des modes particuliers de mise en oeuvre, le procédé de recherche comporte l'une ou plusieurs des caractéristiques suivantes, prises isolément ou selon toutes les combinaisons techniquement possibles.

Dans un mode particulier de mise en oeuvre, dans lequel les fréquences élémentaires sont séparées par un pas d'échantillonnage $\Delta b$ inférieur à $\Delta B$, le procédé comporte une étape de calcul d'un signal, dit « signal moyenné », par moyennage du signal fréquentiel avec une fenêtre glissante sur les fréquences élémentaires, la fenêtre glissante étant de largeur sensiblement égale à $\Delta B$. Dans ce cas, le signal non utile est calculé dans par filtrage du signal moyenné, et le signal de rapport de puissance est calculé comme étant représentatif du rapport, en chaque fréquence élémentaire, entre le signal moyenné et le signal non utile.

Du fait de ce moyennage, la puissance, dans chaque bande sensiblement de largeur spectrale $\Delta B$, est concentrée autour de la fréquence élémentaire se trouvant sensiblement au centre de cette bande sensiblement de largeur fréquentielle $\Delta B$. De la sorte, la détection de signaux utiles est améliorée du fait notamment que, en présence d'un signal utile, le signal moyenné comportera un maximum local au niveau de la fréquence élémentaire la plus proche de la fréquence centrale réelle dudit signal utile, alors que ce n'était pas nécessairement le cas dans le signal fréquentiel.

En outre, il est avantageux de considérer un pas d'échantillonnage $\Delta b$ très inférieur à $\Delta B$ (par exemple inférieur à $\Delta B/4$) pour améliorer notamment la précision des fréquences centrales des signaux utiles. La concentration de puissance est alors d'autant plus avantageuse que la puissance d'un signal utile est alors répartie sur plusieurs échantillons adjacents du signal fréquentiel.

Dans un mode particulier de mise en oeuvre, la valeur seuil est préalablement déterminée comme étant une valeur du signal de rapport de puissance au-dessus de laquelle la probabilité de décoder avec erreurs un signal utile est inférieure à 5 %, de préférence inférieure à 1 %.

Par « probabilité de décoder avec erreurs un signal utile », on entend la probabilité d'avoir, au niveau de la couche physique, au moins un bit faux parmi les bits obtenus après démodulation des symboles (BPSK, DBPSK, QPSK, 16QAM, etc.) et après décodage de canal si un codage de canal a été réalisé par le terminal ayant émis le signal utile.

Un tel choix de valeur seuil pour le signal de rapport de puissance est particulièrement avantageux en ce qu'il permet de limiter la détection aux signaux utiles susceptibles d'être décodés sans erreurs avec une probabilité élevée. Un tel choix de valeur seuil est possible du fait que le signal de rapport de puissance est représentatif du rapport signal sur bruit/interférence qu'aurait un signal utile en chaque fréquence élémentaire, de sorte qu'une valeur seuil adaptée peut être préalablement définie, par exemple par simulation.

Il est à noter qu'un tel critère de probabilité faible de décoder un signal utile avec erreurs est très différent d'un critère de probabilité de détection élevée. En effet, dans ce mode particulier de mise en oeuvre, on ne détecte que des signaux utiles pour lesquels il est quasiment assuré d'avoir un décodage sans erreurs. Ainsi, des signaux utiles ne seront pas détectés si la probabilité de les décoder avec erreurs est trop élevée, de sorte que la probabilité de détection pourra être peu élevée.

Un tel mode de mise en oeuvre s'adresse préférentiellement à des systèmes de télécommunications numériques qui peuvent tolérer une probabilité de détection peu performante, par exemple du fait qu'un même signal utile est réémis plusieurs fois par chaque terminal.

En contrepartie, un tel procédé de recherche permet d'optimiser l'utilisation de la capacité de calcul d'une station devant décoder les signaux utiles, dans la mesure où ladite capacité de calcul est principalement utilisée pour le traitement de signaux utiles suffisamment puissants pour être décodés.

Selon un second aspect, l'invention concerne un produit programme d'ordinateur comportant un ensemble d'instructions de code de programme qui, lorsqu'elles sont exécutées par un ou plusieurs processeur, mettent en oeuvre un procédé de recherche de la présence d'un signal utile dans un signal global conformément à l'invention.

Selon un troisième aspect, l'invention concerne une unité de réception d'un signal utile correspondant à un signal radioélectrique de largeur spectrale ΔB prédéfinie émis par un terminal dans une bande de multiplexage de largeur spectrale supérieure à ΔB, ladite unité de réception comportant des moyens configurés pour effectuer une recherche de la présence d'un signal utile dans la bande de multiplexage selon un procédé conforme à l'invention.

Selon un quatrième aspect, l'invention concerne une station d'un système de télécommunications numérique, ladite station comportant une unité de réception conforme à l'invention.

**PRÉSENTATION DES FIGURES**

L'invention sera mieux comprise à la lecture de la description suivante, donnée à titre d'exemple nullement limitatif, et faite en se référant aux figures qui représentent :

- Figure 1 : une représentation schématique d'un système de télécommunications numériques,
- Figure 2 : un diagramme illustrant les principales étapes d'un procédé de recherche de signal utile,
- Figures 3a à 3d : des exemples de signaux fréquentiels obtenus à en sortie d'étapes du procédé de recherche de la figure 2.

Dans ces figures, des références identiques d'une figure à une autre désignent des éléments identiques ou analogues. Pour des raisons de clarté, les éléments représentés ne sont pas à l'échelle, sauf mention contraire.

**DESCRIPTION DÉTAILLÉE DE MODES DE RÉALISATION**

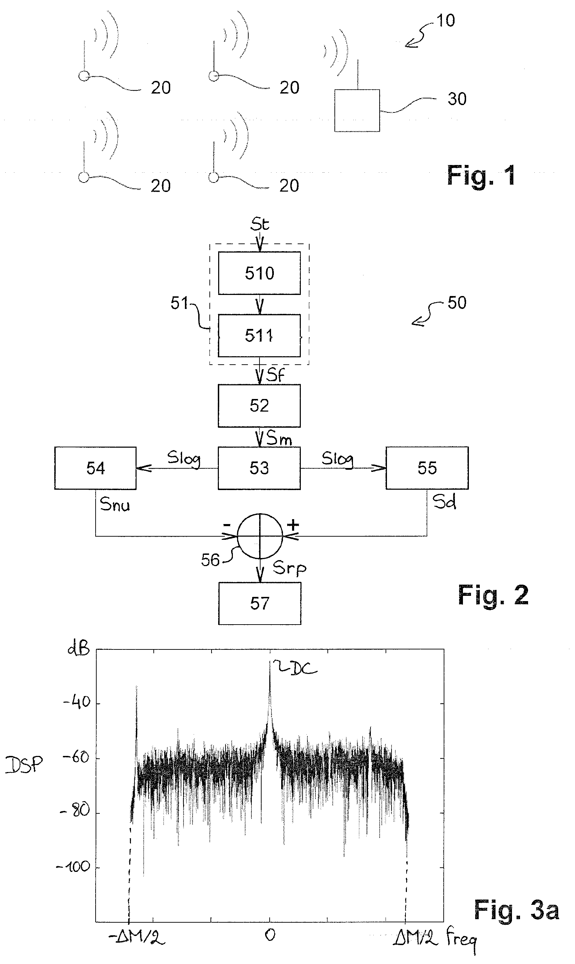

La figure 1 représente, de façon très schématique, un système 10 de télécommunications comprenant plusieurs terminaux 20 et une station 30.

Dans le contexte de l'invention, on entend de manière générale par « station » tout dispositif récepteur adapté à recevoir des signaux radioélectriques. La station 30 est par exemple l'un quelconque des terminaux 20, ou un dispositif particulier tel qu'un point d'accès à un réseau filaire ou non filaire de télécommunications, centralisant les données émises par chacun desdits terminaux 20.

On entend par « signal radioélectrique » une onde électromagnétique se propageant via des moyens non filaires, dont les fréquences sont comprises dans le spectre traditionnel des ondes radioélectriques (quelques hertz à plusieurs centaines de gigahertz) ou dans des bandes de fréquences voisines.

Il est à noter qu'on considère principalement le cas d'une émission de données par des terminaux 20 vers la station 30. L'émission éventuelle de données par la station 30 vers les terminaux 20 sort du cadre de l'invention.

Les terminaux 20 émettent des signaux utiles à destination de la station 30 dans une bande fréquentielle partagée, dite « bande de multiplexage », de largeur spectrale ΔM.

Les signaux utiles émis par les terminaux 20 sont de largeur spectrale ΔB prédéfinie inférieure à ΔM. De préférence, la largeur spectrale ΔM de la bande de multiplexage est significativement supérieure à la largeur spectrale ΔB des signaux utiles, afin de pouvoir multiplexer un grand nombre de terminaux 20. Par exemple, la largeur spectrale ΔM est au moins cent fois supérieure à la largeur spectrale ΔB.

Les largeurs spectrales ΔB et ΔM sont toutes deux connues a priori de la station 30. Par contre, la fréquence centrale autour de laquelle un terminal 20 émet un signal utile n'est pas forcément connue a priori de la station 30. C'est par exemple le cas, tel qu'indiqué précédemment, lorsque la dérive en fréquence des signaux utiles est supérieure à la largeur spectrale ΔB desdits signaux utiles (voir demande internationale WO 2011/154466).

Dans la suite de la description, on se place de manière non limitative dans un système de télécommunications numériques tel que décrit dans la demande internationale WO 2011/154466, dans lesquels les signaux utiles sont à bande étroite (largeur spectrale ΔB de l'ordre de quelques hertz à quelques centaines de hertz) et la dérive en fréquence desdits signaux utiles est supérieure à la largeur spectrale ΔB.

On note d'ailleurs que la largeur spectrale ΔB des signaux utiles correspond à la largeur spectrale instantanée desdits signaux utiles. On comprend en effet que les fréquences balayées au cours du temps par un signal utile peuvent représenter une bande fréquentielle de largeur supérieure à ΔB, du fait notamment de la dérive en fréquence dudit signal utile.

Par conséquent, la station 30 doit effectuer une recherche de la présence de signaux utiles dans toute la bande de multiplexage, conjointement à une recherche des fréquences centrales des signaux utiles présents dans ladite bande de multiplexage.

**EP 2 870 740 B1**

A cet effet, la station 30 comporte notamment une unité de réception adaptée à recevoir un signal global correspondant à l'ensemble des signaux radioélectriques reçus dans la bande de multiplexage.

L'unité de réception comporte un module de réception analogique et un module de réception numérique.

Le module de réception analogique comporte un ensemble de moyens, considérés comme connus de l'homme de l'art (antennes, filtres analogiques, amplificateurs, oscillateurs locaux, mélangeurs, etc.), adaptés à translater fréquentiellement le signal global.

Le module de réception analogique présente en sortie un signal analogique correspondant au signal global ramené autour d'une fréquence intermédiaire inférieure à la fréquence centrale de la bande de multiplexage, pouvant être nulle (auquel cas deux signaux analogiques sont fournis, correspondant de manière connue aux voies en phase I et en quadrature Q).

Le module de réception numérique comporte, de manière connue, un ou plusieurs convertisseurs analogique/numérique (A/N) adaptés à échantillonner le ou les signaux analogiques fournis par le module de réception analogique, avec une période d'échantillonnage prédéfinie, de sorte à obtenir un signal numérique St représentatif du ou des signaux analogiques.

Le module de réception numérique comporte en outre une unité de traitement du signal numérique en sortie des convertisseurs A/N. L'unité de traitement exécute notamment, à partir du signal numérique, les étapes d'un procédé 50 de recherche de la présence d'un signal utile dans le signal global, décrit plus en détail ci-après.

L'unité de traitement comporte par exemple un processeur et une mémoire électronique dans laquelle est mémorisé un produit programme d'ordinateur, sous la forme d'un ensemble d'instructions de code de programme qui, lorsqu'elles sont exécutées par le processeur, mettent en oeuvre tout ou partie des étapes d'un procédé 50 de recherche de la présence d'un signal utile conforme à l'invention. Dans une variante, l'unité de traitement comporte des circuits logiques programmables, de type FPGA, PLD, etc., et/ou circuits intégrés spécialisés (ASIC), adaptés à mettre en oeuvre tout ou partie des étapes dudit procédé 50 de recherche.

La figure 2 représente les principales étapes d'un procédé 50 de recherche de la présence d'un signal utile émis par un terminal 20 dans la bande de multiplexage, lesquelles sont :

- 51 calcul d'un signal fréquentiel Sf,
- 54 calcul d'un signal, dit « signal non utile » Snu,
- 56 calcul d'un signal, dit « signal de rapport de puissance » Srp,
- 57 comparaison du signal de rapport de puissance Srp à une valeur seuil prédéfinie.

Dans le mode de mise en oeuvre illustré par la figure 2, le procédé 50 de recherche comporte également, outre les étapes principales ci-dessus, des étapes optionnelles qui seront décrites ci-après.

Le signal fréquentiel Sf calculé au cours de l'étape 51 de calcul est représentatif d'une densité spectrale de puissance du signal global, ladite densité spectrale de puissance étant désignée ci-après par « DSP ».

Plus particulièrement, le signal fréquentiel Sf est constitué de N échantillons Sf(n) ($0 \leq n \leq$ N-1) représentatifs des valeurs prises par la densité spectrale de puissance DSP du signal global à des fréquences élémentaires fn ($0 \leq n \leq$ N-1) réparties régulièrement dans la bande de multiplexage avec un pas d'échantillonnage $\Delta$b supposé tel que N·$\Delta$b = $\Delta$M. En d'autres termes :

- Sf = {Sf(n), avec $0 \leq n \leq$ N-1},
- Sf(n) ~ DSP(fn), « ~ » signifiant « représentatif de »,
- fn = f0 + n·$\Delta$b, avec $0 \leq n \leq$ N-1.

Afin d'estimer de manière précise la fréquence centrale d'un éventuel signal utile présent dans le signal global, le pas d'échantillonnage $\Delta$b est en outre choisi inférieur à la largeur spectrale $\Delta$B des signaux utiles. Dans des modes préférés de mise en oeuvre, le pas d'échantillonnage $\Delta$b est très inférieur à la largeur spectrale $\Delta$B, par exemple inférieur à $\Delta$B/4.

La figure 2 représente un mode particulier de mise en oeuvre de l'étape 51 de calcul du signal fréquentiel Sf. Dans ce mode particulier, l'étape 51 de calcul du signal fréquentiel Sf comporte des sous-étapes de :

- 510 calcul d'une transformée de Fourier discrète (FFT, « Fast Fourier Transform ») du signal numérique St, qui est un signal défini dans le domaine temporel,
- 511 calcul du signal fréquentiel Sf comme étant le module, en chaque fréquence élémentaire, du résultat de la transformée de Fourier discrète.

Il est connu que la densité spectrale de puissance du signal numérique St (représentatif du signal global) est obtenue, en chaque fréquence élémentaire, en calculant le carré du module du résultat de la transformée de Fourier discrète. Ainsi le signal fréquentiel Sf est relié à la densité spectrale de puissance DSP du signal global par l'expression suivante :

## puissance DSP du signal global par l'expression suivante

$$Sf(n) = \sqrt{DSP(fn)}$$

La figure 3a représente, en échelle logarithmique, un exemple de densité spectrale de puissance DSP d'un signal global ramené en bande de base. En d'autres termes, la figure 3a représente l'évolution de la fonction $20 \cdot \log(Sf(n))$ pour des fréquences élémentaires réparties dans un intervalle de fréquences $[-\Delta M/2 ; \Delta M/2]$.

Il est à noter que la densité spectrale de puissance DSP, dans cette figure 3a, comporte une raie centrée sur la fréquence nulle, qui correspond à une composante continue indésirable, désignée par « DC » (« Direct Current ») sur ladite figure 3a. Il est en effet connu de l'homme du métier que la fréquence nulle est généralement très perturbée, de sorte qu'elle est le plus souvent ignorée dans la recherche de la présence de signaux utiles du fait que :

- cette composante continue indésirable risque de conduire à une fausse détection (c'est-à-dire considérer par erreur qu'un signal utile est présent, centré sur la fréquence nulle),
- quand bien même un signal utile serait présent, centré sur la fréquence nulle, la probabilité de le décoder sans erreurs est faible.

Dans le mode de mise en oeuvre illustré par la figure 2, le procédé 50 de recherche comporte une étape 52 de calcul d'un signal, dit « signal moyenné » Sm. Le signal moyenné Sm calculé au cours de l'étape 52 est obtenu par moyennage du signal fréquentiel Sf avec une fenêtre glissante sur les fréquences élémentaires fn ($0 \leq n \leq N-1$), ladite fenêtre glissante étant de largeur sensiblement égale à la largeur spectrale $\Delta B$ des signaux utiles.

Ce moyennage du signal fréquentiel Sf vise à concentrer la puissance, dans chaque bande sensiblement de largeur spectrale $\Delta B$, autour de la fréquence élémentaire se trouvant sensiblement au centre de cette bande sensiblement de largeur fréquentielle $\Delta B$. De la sorte, en présence d'un signal utile, le signal moyenné Sm devrait théoriquement comporter un maximum local au niveau de la fréquence élémentaire la plus proche de la fréquence centrale réelle dudit signal utile, alors que ce n'était pas nécessairement le cas dans le signal fréquentiel Sf.

Par conséquent, le signal moyenné Sm est représentatif, en chaque fréquence élémentaire, de la totalité de puissance reçue dans une bande de largeur fréquentielle $\Delta B$ centrée sur cette fréquence élémentaire, qui correspond à la puissance du signal non utile dans cette bande, le cas échéant cumulée à la puissance d'un signal utile présent dans cette bande.

L'étape 52 de calcul du signal moyenné Sm comporte par exemple le calcul de l'expression suivante :

$$Sm(n) = \sum_{m=-M/2}^{M/2} h(m) \cdot Sf(n+m)$$

expression dans laquelle :

- $h = \{h(m)$, avec $-M/2 \leq m \leq M/2\}$ est la fenêtre glissante utilisée pour le moyennage, M étant un nombre entier pair,
- $Sf(n+m) = Sf(n+m)$ si $0 \leq n+m \leq N-1$
- $Sf(n+m) = 0$ si $n+m < 0$ ou si $n+m > N-1$.

Afin d'avoir une fenêtre de moyennage de largeur fréquentielle sensiblement égale à la largeur spectrale $\Delta B$, M est par exemple choisi tel que $(M-2) \cdot \Delta b \leq \Delta B \leq (M+2) \cdot \Delta b$.

Dans un mode particulier de mise en oeuvre, la fenêtre glissante h utilisée est une simple fenêtre rectangulaire. En d'autres termes, $h(m) = 1/(M+1)$ avec $-M/2 \leq m \leq M/2$. Rien n'exclut, suivant d'autres exemples, de considérer d'autres types de fenêtres glissantes, représentatives le cas échéant de moyennes pondérées.

Dans le mode particulier de mise en oeuvre illustré par la figure 2, le procédé 50 de recherche comporte une étape 53 au cours de laquelle le signal moyenné Sm est passé en échelle logarithmique, en calculant un signal Slog :

$$Slog(n) = 20 \cdot \log(Sm(n)), \text{ avec } 0 \leq n \leq N-1$$

Le passage en échelle logarithmique est avantageux pour permettre de calculer plus simplement le signal de rapport de puissance Srp.

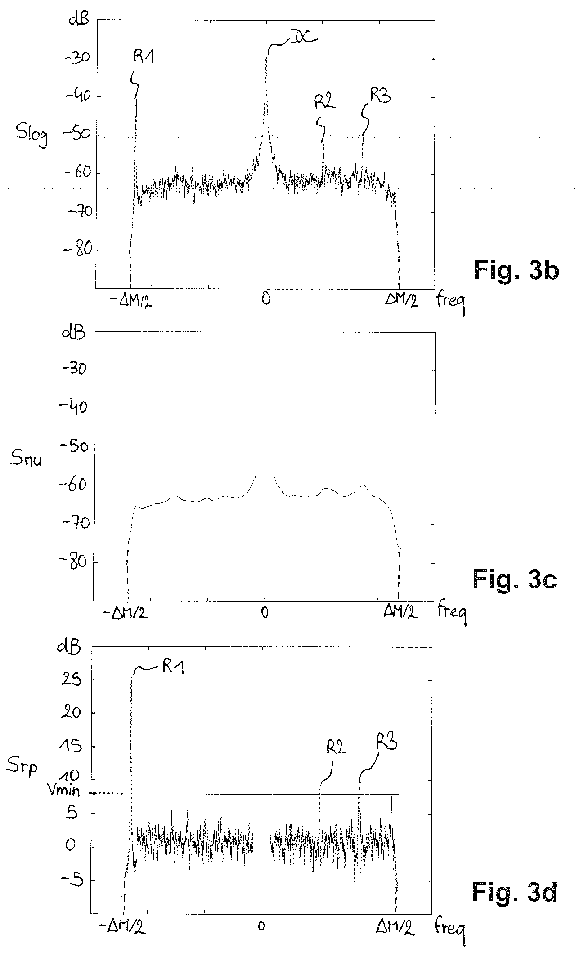

La figure 3b représente un signal Slog obtenu à partir du signal illustré par la figure 3a. Tel qu'illustré par la figure 3b, le moyennage fait ressortir des maxima locaux R1, R2, R3 susceptibles de correspondre à des signaux utiles, par une concentration de la puissance des signaux utiles autour de leur fréquence centrale, mais également par une réduction des fluctuations d'une densité spectrale de puissance d'un bruit présent dans le signal fréquentiel Sf.

Dans le mode particulier de mise en oeuvre illustré par la figure 2, le signal Slog, issu du signal moyenné Sm et représentatif de la densité spectrale de puissance DSP du signal global, est fourni ensuite à deux branches distinctes de traitement :

- une première branche dans laquelle le signal non utile Snu est calculé à partir du signal Slog (étape 54 de calcul),
- une seconde branche dans laquelle un signal, dit « signal décalé » Sd, est calculé à partir du signal Slog.

Dans la première branche, le signal non utile Snu est calculé par filtrage du signal Slog au moyen d'un filtre adapté à supprimer tout ou partie de signaux de largeur spectrale égale ou inférieure à $\Delta B$.

Ainsi, l'étape 54 de calcul du signal non utile Snu réalise un filtrage passe-bas des variations fréquentielles du signal Slog dans la bande de multiplexage. En effet, les variations « rapides » du signal Slog, qui correspondent à des signaux qui occupent une bande fréquentielle étroite, seront davantage atténuées que les variations fréquentielles « lentes » du signal Slog, qui correspondent à des signaux qui occupent une bande fréquentielle large.

Le filtre, mis en oeuvre au cours de l'étape 54 de calcul du signal non utile Snu, est adapté à atténuer fortement les signaux qui occupent une bande fréquentielle égale ou inférieure à $\Delta B$, par rapport aux signaux qui occupent une bande fréquentielle supérieure à $\Delta M$. La conception d'un tel filtre est considérée comme étant à la portée de l'homme de l'art.

Du fait de l'utilisation d'un filtre présentant les caractéristiques ci-dessus, on comprend que, dans le signal non utile Snu obtenu :

- les signaux utiles éventuellement présents dans le signal global (et donc dans le signal Slog) seront fortement atténués,
- un bruit, de densité spectrale de puissance sensiblement constante dans toute la bande de multiplexage, sera faiblement atténué.

Par conséquent, le filtrage du signal Slog permet d'obtenir un signal non utile Snu représentatif, en chaque fréquence élémentaire, de la puissance reçue dans une bande de largeur fréquentielle $\Delta B$ centrée sur cette fréquence élémentaire, les signaux de largeur spectrale égale ou inférieure à $\Delta B$ (et par conséquent tous les signaux utiles éventuellement présents dans le signal global) ayant été préalablement supprimés. Le signal non utile Snu est donc représentatif de bruits/interférences présents dans la bande de multiplexage.

Par conséquent, le filtrage du signal Slog permet d'obtenir un signal non utile Snu dans lequel les signaux utiles ont été sensiblement supprimés,

La figure 3c représente un signal non utile Snu obtenu à partir du signal Slog illustré par la figure 3b. On constate que, du fait du filtrage, les maxima locaux R1, R2 et R3 ont été fortement atténués, alors qu'un niveau moyen du signal Slog dans la bande de multiplexage a été faiblement atténué.

Dans la seconde branche, le procédé 50 de recherche comporte une étape 55 au cours de laquelle le signal Slog, issu du signal moyenné, est décalé en fréquences, de sorte à obtenir un signal décalé Sd recalé fréquentiellement avec le signal non utile Snu.

En effet, le signal non utile Snu présente de manière connue un décalage fréquentiel, qui est introduit par le filtrage fréquentiel et qui dépend de l'ordre du filtre fréquentiel mis en oeuvre. La détermination du décalage fréquentiel introduit et sa compensation s'effectuent de manière simple, par des opérations considérées comme à la portée de l'homme de l'art.

Le procédé 50 de recherche de signal utile comporte ensuite l'étape 56 de calcul du signal de rapport de puissance Srp, ledit signal de rapport de puissance étant représentatif, en chaque fréquence élémentaire, d'un rapport entre le signal moyenné Sm obtenu pour cette fréquence élémentaire et le signal non utile Snu obtenu pour cette fréquence élémentaire.

Dans l'exemple illustré par la figure 2, le calcul du signal de rapport de puissance Srp est effectué à partir du signal non utile Snu et du signal décalé Sd, qui correspond essentiellement au signal moyenné Sm.

Du fait que le signal non utile Snu et le signal décalé Sd sont tous deux en échelle logarithmique, le calcul du signal de rapport de puissance Srp est réalisé simplement par soustraction, en chaque fréquence élémentaire, du signal non utile Snu au signal décalé Sd :

$$Srp(n) = Sd(n) - Snu(n), \text{ avec } 0 \leq n \leq N-1$$

La figure 3d représente un signal de rapport de puissance Srp obtenu à partir des signaux illustrés par les figures 3b et 3c.

Le procédé 50 de recherche de signal utile comporte ensuite l'étape 57 de comparaison du signal de rapport de puissance Srp à une valeur seuil Vmin prédéfinie. Au cours de cette étape, une fréquence élémentaire pour laquelle ledit signal de rapport de puissance Srp présente un maximum local supérieur à ladite valeur seuil Vmin est considérée comme étant la fréquence centrale d'un signal utile présent dans le signal global.

Dans l'exemple illustré par la figure 3d (dans lequel la composante continue indésirable DC a été ignorée), la valeur seuil Vmin considérée est sensiblement égale à 8 décibels (dB), et on constate que les maxima locaux R1, R2 et R3 sont tous trois supérieurs à ladite valeur seuil Vmin. Par conséquent, ces trois maxima locaux R1, R2 et R3 sont considérés comme correspondant à des signaux utiles, et les fréquences élémentaires pour lesquelles ces maxima locaux ont été obtenus sont considérées comme étant les fréquences centrales respectives de ces signaux utiles.

Dans un mode préféré de mise en oeuvre, la valeur seuil Vmin est préalablement déterminée comme étant une valeur du signal de rapport de puissance Srp au-dessus de laquelle la probabilité de décoder avec erreurs un signal utile détecté est inférieure à 5 %, de préférence inférieure à 1 %.

Un tel choix de valeur seuil Vmin est avantageux car il permet d'optimiser l'utilisation d'une capacité de calcul de la station 30, dans la mesure où ladite capacité de calcul est principalement utilisée pour le traitement de signaux utiles suffisamment puissants pour être décodés.

De manière plus générale, la portée de la présente invention ne se limite pas aux modes de mise en oeuvre et de réalisation décrits ci-dessus à titre d'exemples non limitatifs.

Notamment, rien n'exclut, suivant d'autres exemples, d'avoir l'étape 53 de passage en échelle logarithmique exécutée à un endroit différent du procédé 50 de recherche, par exemple exécutée d'une part sur le signal non utile Snu et, d'autre part, sur le signal décalé Sd, juste avant l'étape 56 de calcul du signal de rapport de puissance Srp.

En outre, le procédé 50 de recherche, dans l'exemple décrit ci-dessus, comporte deux branches de traitement qui prennent en entrée le signal Slog. Ces deux branches de traitement pourraient cependant prendre en entrée d'autres signaux. Suivant un exemple non limitatif, ces deux branches peuvent prendre en entrée le signal fréquentiel Sf. Dans ce cas, la première branche (obtention du signal non utile Snu) peut réaliser le moyennage de l'étape 52 et le filtrage de l'étape 54, et éventuellement un passage en échelle logarithmique. La seconde branche réalise alors le moyennage de l'étape 52 et, le cas échéant, un passage en échelle logarithmique. Dans cet exemple, chaque branche de traitement comporte ainsi le moyennage de l'étape 52. Dans la première branche, le moyennage de l'étape 52 et le filtrage de l'étape 54 peuvent en outre être réalisés conjointement avec un seul filtre.

**Revendications**

**1.** - Procédé (50) de recherche de la présence d'un signal utile dans un signal global, ledit signal utile correspondant à un signal radioélectrique de largeur spectrale ΔB prédéfinie émis par un terminal dans une bande de multiplexage de largeur spectrale supérieure à ΔB, ledit signal global correspondant à l'ensemble des signaux radioélectriques reçus dans la bande de multiplexage, le procédé comporte des étapes de :

- (51) calcul d'un signal fréquentiel représentatif d'une densité spectrale de puissance du signal global échantillonnée à des fréquences élémentaires de la bande de multiplexage,
- (54) calcul d'un signal, dit « signal non utile », par filtrage du signal fréquentiel au moyen d'un filtre adapté à supprimer tout ou partie de signaux de largeur spectrale égale ou inférieure à ΔB,

le procédé est **caractérisé en ce qu'**il comporte des étapes de:

- (56) calcul d'un signal, dit « signal de rapport de puissance », représentatif du rapport, en chaque fréquence élémentaire, entre le signal fréquentiel et le signal non utile,
- (57) comparaison du signal de rapport de puissance à une valeur seuil prédéfinie, une fréquence élémentaire pour laquelle ledit signal de rapport de puissance présente un maximum local supérieur à ladite valeur seuil étant considérée comme étant la fréquence centrale d'un signal utile présent dans le signal global.

**2.** - Procédé (50) selon la revendication 1, **caractérisé en ce que**, les fréquences élémentaires étant séparées par un pas d'échantillonnage Δb inférieur à ΔB, ledit procédé comporte une étape (52) de calcul d'un signal, dit « signal moyenné », par moyennage du signal fréquentiel avec une fenêtre glissante sur les fréquences élémentaires, la fenêtre glissante étant de largeur sensiblement égale à $\Delta B$, et :

- le signal non utile est calculé par filtrage du signal moyenné,
- le signal de rapport de puissance est calculé comme étant représentatif du rapport, en chaque fréquence élémentaire, entre le signal moyenné et le signal non utile.

**3.** - Procédé (50) selon la revendication 2, **caractérisé en ce que** la fenêtre glissante considérée au cours de l'étape (52) de calcul du signal moyenné est une fenêtre rectangulaire.

**4.** - Procédé (50) selon l'une des revendications précédentes, **caractérisé en ce que** la valeur seuil est préalablement déterminée comme étant une valeur du signal de rapport de puissance au-dessus de laquelle la probabilité de décoder avec erreurs un signal utile détecté est inférieure à 5 %, de préférence inférieure à 1 %.

**5.** - Procédé (50) selon l'une des revendications précédentes, **caractérisé en ce que** les fréquences élémentaires sont séparées par un pas d'échantillonnage $\Delta b$ inférieur à $\Delta B/4$.

**6.** - Produit programme d'ordinateur, **caractérisé en ce qu'**il comporte un ensemble d'instructions de code de programme qui, lorsqu'elles sont exécutées par un processeur, mettent en oeuvre un procédé (50) de recherche de la présence d'un signal utile dans un signal global selon l'une des revendications précédentes.

**7.** - Unité de réception d'un signal utile correspondant à un signal radioélectrique de largeur spectrale $\Delta B$ prédéfinie émis par un terminal dans une bande de multiplexage de largeur spectrale supérieure à $\Delta B$, **caractérisé en ce qu'**elle comporte des moyens configurés pour effectuer une recherche d'un signal utile dans ladite bande de multiplexage conformément à un procédé (50) selon l'une des revendications 1 à 5.

**8.** - Station (30) d'un système (10) de télécommunications numérique, **caractérisée en ce qu'**elle comporte une unité de réception selon la revendication 7.

**Patentansprüche**

**1.** Verfahren (50) zur Suche nach dem Vorhandensein eines Nutzsignals in einem Gesamtsignal, wobei das Nutzsignal einem Funksignal mit vorab definierter Spektralbreite $\Delta B$ entspricht, das von einem Endgerät in einem Multiplex-Band einer Spektralbreite größer als $\Delta B$ gesendet wird, wobei das Gesamtsignal der Gesamtheit der im Multiplex-Band empfangenen Funksignale entspricht, wobei das Verfahren Schritte aufweist:

- (51) der Berechnung eines Frequenzsignals repräsentativ für eine Leistungsspektraldichte des Gesamtsignals, die mit Elementarfrequenzen des Multiplex-Band abgetastet wird,
- (54) der Berechnung eines Signals, « Nicht-Nutzsignal » genannt, durch Filtern des Frequenzsignals mittels eines Filters, der geeignet ist, alle oder einen Teil von Signalen einer Spektralbreite gleich oder geringer als $\Delta B$ zu unterdrücken,

wobei das Verfahren **dadurch gekennzeichnet ist, dass** es Schritte aufweist:

- (56) der Berechnung eines Signals, « Leistungsverhältnissignal » genannt, das für das Verhältnis, in jeder Elementarfrequenz, zwischen dem Frequenzsignal und dem Nicht-Nutzsignal repräsentativ ist,
- (57) des Vergleichs des Leistungsverhältnissignals mit einem vorab definierten Schwellwert, wobei eine Elementarfrequenz, für die das Leistungsverhältnissignal ein lokales Maximum größer als der Schwellwert aufweist, als die Mittenfrequenz eines im Gesamtsignal vorhandenen Nutzsignals angesehen wird.

**2.** Verfahren (50) nach Anspruch 1, **dadurch gekennzeichnet, dass**, da die Elementarfrequenzen durch einen Abtastschritt $\Delta b$ kleiner als $\Delta B$ getrennt sind, das Verfahren einen Schritt (52) der Berechnung eines Signals, « gemitteltes Signal » genannt, durch Mittelung des Frequenzsignals mit einem gleitenden Fenster auf den Elementarfrequenzen aufweist, wobei das gleitende Fenster eine Breite im Wesentlichen gleich $\Delta B$ hat, und:

- das Nicht-Nutzsignal durch Filtern des gemittelten Signals berechnet wird,
- das Leistungsverhältnissignal als für das Verhältnis, in jeder Elementarfrequenz, zwischen dem gemittelten Signal und dem Nicht-Nutzsignal repräsentativ berechnet wird.

**3.** Verfahren (50) nach Anspruch 2, **dadurch gekennzeichnet, dass** das während des Schritts (52) der Berechnung des gemittelten Signals berücksichtigte gleitende Fenster ein rechtwinkliges Fenster ist.

**4.** Verfahren (50) nach einem der vorhergehenden Ansprüche, **dadurch gekennzeichnet, dass** der Schwellwert vorab bestimmt wird als ein Wert des Leistungsverhältnissignals, oberhalb dessen die Wahrscheinlichkeit des Decodierens mit Fehlern eines erfassten Nutzsignals geringer als 5 %, vorzugsweise geringer als 1% ist.

**5.** Verfahren (50) nach einem der vorhergehenden Ansprüche, **dadurch gekennzeichnet, dass** die Elementarfrequenzen durch einen Abtastschritt $\Delta b$ kleiner als $\Delta B/4$ getrennt sind.

**6.** Computerprogrammprodukt, **dadurch gekennzeichnet, dass** es eine Einheit von Programmcodeanweisungen aufweist, die, wenn sie von einem Prozessor ausgeführt werden, ein Verfahren (50) zur Suche nach dem Vorhandensein eines Nutzsignals in einem Gesamtsignal nach einem der vorhergehenden Ansprüche anwenden.

**7.** Empfangseinheit eines Nutzsignals entsprechend einem Funksignal einer vorab definierten Spektralbreite $\Delta B$, das von einem Endgerät in einem Multiplex-Band einer Spektralbreite größer als $\Delta B$ gesendet wird, **dadurch gekennzeichnet, dass** sie Einrichtungen aufweist, die konfiguriert sind, eine Suche eines Nutzsignals im Multiplex-Band gemäß einem Verfahren (50) nach einem der Ansprüche 1 bis 5 durchzuführen.

**8.** Station (30) eines digitalen Telekommunikationssystems (10), **dadurch gekennzeichnet, dass** sie eine Empfangseinheit nach Anspruch 7 aufweist.

**Claims**

**1.** A method (50) of searching for the presence of a useful signal in a global signal, said useful signal corresponding to a radioelectric signal having a predefined spectral width $\Delta B$ transmitted by a terminal in a multiplexing band having a spectral width greater than $\Delta B$, said global signal corresponding to all the radioelectric signals received in the multiplexing band, the method comprises steps of:

- (51) calculating a frequency signal representative of a power spectral density of the global signal sampled at elementary frequencies of the multiplexing band,
- (54) calculating a signal, called "non-useful signal", by filtering of the frequency signal by means of a filter capable of suppressing all or part of signals having a spectral width equal to or smaller than $\Delta B$,

the method is **characterized in that** it comprises steps of:

- (56) calculating a signal, called "power ratio signal", representative of the ratio, at each elementary frequency, of the frequency signal to the non-useful signal,
- (57) comparing the power ratio signal with a predefined threshold value, an elementary frequency for which said power ratio signal has a local maximum value greater than said threshold value being considered as being the central frequency of a useful signal present in the global signal.

**2.** The method (50) of claim 1, **characterized in that** the elementary frequencies being separated by a sampling interval $\Delta b$ smaller than $\Delta B$, said method comprises a step (52) of calculating a signal, called "averaged signal", by averaging the frequency signal with a sliding window on the elementary frequencies, the sliding window having a width substantially equal to $\Delta B$, and:

- the non-useful signal is calculated by filtering of the averaged signal,
- the power ratio signal is calculated as being representative of the ratio, at each elementary frequency, of the averaged signal to the non-useful signal.

**3.** The method (50) of claim 2, **characterized in that** the sliding window considered during the step (52) of calculating the averaged signal is a rectangular window.

**4.** The method (50) of any of the foregoing claims, **characterized in that** the threshold value is previously determined as being a value of the power ratio signal above which the probability to decode a useful signal with errors is lower than 5%, preferably lower than 1%.

5. The method (50) of any of the foregoing claims, **characterized in that** the elementary frequencies are separated by a sampling interval $\Delta b$ smaller than $\Delta B/4$.

6. A computer program product, **characterized in that** it comprises a set of program code instructions which, when they are executed by a processor, implement the method (50) of searching for the presence of a useful signal in a global signal of any of the foregoing claims.

7. A unit for receiving a useful signal corresponding to a radioelectric signal of predefined spectral width $\Delta B$ transmitted by a terminal in a multiplexing band having a spectral width greater than $\Delta B$, **characterized in that** said receive unit comprises means configured to search for the presence of a useful signal in said multiplexing band in accordance with the method (50) of any of claims 1 to 5.

8. A station (30) of a digital telecommunications system (10), **characterized in that** it comprises the receiver unit of claim 7.

St

| 510 |

51

| 511 |

50

Sf

| 52 |

Sm

| 54 | ← Slog — | 53 | — Slog → | 55 |

Snu                                                        Sd

−  ⊕  +

56          Srp

| 57 |

**Fig. 2**

dB

~DC

−40

DSP   −60

−80

−100

−ΔM/2            0            ΔM/2  freq

**Fig. 3a**

Fig. 3b

Fig. 3c

Fig. 3d

**EP 2 870 740 B1**

## RÉFÉRENCES CITÉES DANS LA DESCRIPTION

**Documents brevets cités dans la description**

- WO 2011154466 A

- US 20110021167 A